# EUROPÄISCHE PATENTSCHRIFT

(11) **EP 3 450 985 B1**
(45) Veröffentlichungstag und Bekanntmachung des Hinweises auf die Patenterteilung: **12.07.2023**
(21) Anmeldenummer: 17188805.0
(22) Anmeldetag: 31.08.2017
(51) Int. Cl.: G01N 35/02, B65G 59/06, G01N 35/00, G01N 35/04

(54) **MIKROPLATTEN-BEARBEITUNGSGERÄT**
MICROPLATE PROCESSING DEVICE
APPAREIL DE TRAITEMENT DE MICRODISQUES

(43) Veröffentlichungstag der Anmeldung: 06.03.2019
(73) Patentinhaber: TECAN TRADING AG, 8708 Männedorf (CH)
(72) Erfinder: GEBETSROITHER, Harald, 5020 Salzburg (AT); ZERZA, Gerald, 5020 Salzburg (AT); POSCH, Johannes, 5400 Hallein (AT); BOLLI, Beat, 8706 Männedorf (CH)
(74) Vertreter: Troesch Scheidegger Werner AG

(56) Entgegenhaltungen:
- EP-A2- 0 301 583
- WO-A2-2006/017737
- DE-U1-202016 102 244
- JP-A- 2001 188 044
- JP-B2- 3 260 237
- US-A1- 2014 191 109
- US-B1- 6 343 906
- US-B1- 7 360 984

## Beschreibung

### TECHNISCHES GEBIET

Die vorliegende Erfindung betrifft ein Mikroplatten-Bearbeitungsgerät, insbesondere mit einer Transfereinheit für Mikroplatten.

### STAND DER TECHNIK

Aus dem Stand der Technik sind Mikroplatten-Bearbeitungsgeräte bekannt, bei welchen Mikroplatten mit einem Manipulator von einem Schlitten des mikroplatten-Bearbeitungsgeräts entfernt oder in diesen eingesetzt werden können. Solche Manipulatoren benötigen Platz, vor allem über dem Bereich des ausgefahrenen Schlittens. Zudem sind solche Manipulatoren komplex, da sie meist in mehreren Richtungen verfahrbar sein müssen. Ausserdem ist die Zugänglichkeit für einen am Manipulator angeordneten Greifers im Bereich des Schlittens sehr eingeschränkt. Folglich ist der Zugriff des Manipulators auf eine auf dem Schlitten angeordnete Mikroplatte eingeschränkt.

US 6 343 906 B1, US 2014/191109 A1, De 20 2016 102244 U1, WO 2006/017737 A2 und JP 2001 188044 A zeigen bekannte Mikroplatten-Bearbeitungsgeräte.

### BESCHREIBUNG DER ERFINDUNG

Eine Aufgabe der vorliegenden Erfindung besteht darin, ein einfaches Mikroplatten-Bearbeitungsgerät bereitzustellen, welches wenig Platz benötigt und eine gute Zugänglichkeit zu einer darauf angeordneten Mikroplatte erlaubt. Beispiele von Mikroplatten-Bearbeitungsgeräten sind Patch Clamp Systeme für Elektrophysiologie, Absorbance Microplate Reader, Fluoresecence Microplate Reader, Lumineszenz Microplate Reader, Zell Imaging Systeme, Elektroporation für Transfektion, Geräte zur Füllstandsmessungen in Mikroplatten und Reader für Microarrays in Mikroplatten.

Diese Aufgabe wird durch ein Mikroplatten-Bearbeitungsgerät mit den Merkmalen des Anspruchs 1 gelöst. Weitere Ausführungsformen des Bearbeitungsgeräts, eines Bearbeitungssystems, sowie eines Verfahrens zum Einführen und/oder Ausführen von Mikroplatten in/aus einem Bearbeitungsbereich eines Mikroplatten-Bearbeitungsgeräts sind durch die Merkmale von weiteren Ansprüchen definiert.

Ein erfindungsgemässes Mikroplatten-Bearbeitungsgerät umfasst mindestens einen Schlitten mit einer ersten Aufnahme für Mikroplatten, wobei der mindestens eine Schlitten in einer ersten horizontalen Richtung verfahrbar ist, wodurch die Mikroplatten in einen Bearbeitungsbereich des Bearbeitungsgeräts einführbar, bzw. aus dem Bearbeitungsbereich ausführbar sind. Weiter umfasst es mindestens einen Lift, welcher in einer vertikalen Richtung verfahrbar ist, wodurch die Mikroplatten dem Schlitten entnehmbar, bzw. zuführbar sind. Der Schlitten umfasst eine Durchgangsöffnung, deren Umfang, in der vertikalen Projektion, den Umfang einer im Schlitten aufgenommenen Mikroplatte zumindest teilweise horizontal nach innen unterragen kann. Der Lift umfasst eine zweite Aufnahme für Mikroplatten, deren Umfang, in der vertikalen Projektion, den Umfang der Durchgangsöffnung unterragt, wodurch die zweite Aufnahme, in der vertikalen Richtung ungehindert durch die Durchgangsöffnung verfahrbar ist. Diese Bauweise ist platzsparend und einfach. Zudem ermöglicht sie eine gute Zugänglichkeit zu einer im Lift aufgenommenen Mikroplatte.

In einer Ausführungsform umfasst die zweite Aufnahme mindestens einen Anschlag, welcher sich von einer zweiten Ebene aus im Wesentlichen in der vertikalen Richtung nach oben erstreckt. Der mindestens eine Anschlag kann einstückig mit der zweiten Aufnahme ausgebildet sein. Alternativ kann der mindestens eine Anschlag an der zweiten Aufnahme angeordnet sein. Der mindestens eine Anschlag ist ausgebildet, um eine seitliche Bewegung einer auf der zweiten Aufnahme angeordneten Mikroplatte zu begrenzen.

In einer Ausführungsform umfasst die zweite Aufnahme mindestens zwei Anschläge, welche zueinander beabstandet und/oder einstückig miteinander ausgebildet sind. Beispielsweise können Anschläge für die Begrenzung einer ersten horizontalen Bewegung einstückig mit Anschlägen für die Begrenzung einer zweiten horizontalen Bewegung ausgebildet sein. Beispielsweise können mehrere Anschläge auf einer, mehreren oder allen Seiten der zweiten Aufnahme vorgesehen sein. Dies erlaubt eine flexible und optimale Anordnung der Anschläge in Hinblick auf die aufzunehmenden Mikroplatten.

In einer Ausführungsform sind die Anschläge derart angeordnet und ausgebildet, dass sie an einer inneren Seitenwand einer in der zweiten Aufnahme aufgenommenen Mikroplatte anliegen können. Dadurch ist die Bereitstellung einer zweiten Aufnahme mit geringeren horizontalen Abmessungen möglich.

In einer Ausführungsform umfasst die Aufnahme mindestens einen Arm, dessen Oberfläche mit der zweiten Ebene zumindest im Bereich seines freien Endes kongruent ist. Beispielsweise können sich zwei, drei, vier oder mehr Arme von einer zentralen Befestigung der zweiten Aufnahme im Wesentlichen radial nach aussen erstrecken. Beispielsweise erstrecken sich die Arme in sich diagonal gegenüberliegende Eckbereiche der zweiten Aufnahme. Mit einer solchen Bauweise müssen keine grossen Gewichte bewegt werden und es können kleinere Aktuatoren für den/die Lifte verwendet werden. Zudem erhöht sich die horizontale Zugänglichkeit zu den aufgenommenen Mikroplatten, da vor allem in den mittleren Regionen der Mikroplatten kein Material der zweiten Aufnahme die Zugänglichkeit beschränkt.

In einer Ausführungsform ist jeder Anschlag im Bereich des freien Endes eines Armes angeordnet. Diese Bauweise ist Gewichtsparend, besonders, wenn die Anschläge für die Beschränkung der Bewegung der Mikroplatte in der ersten und zweiten horizontalen Richtung miteinander kombiniert werden.

In einer Ausführungsform sind die Anschläge derart angeordnet und ausgebildet, dass sie an einer äusseren Seitenwand einer in der zweiten Aufnahme aufgenommenen Mikroplatte anliegen können. Mit dieser Ausgestaltung kann von aussen festgestellt werden, ob die in einem Lift aufgenommene Mikroplatte richtig an den Anschlägen anliegt.

Erfindungsgemäß umfasst die Durchgangsöffnung des Schlittens mindestens eine Ausnehmung, welche den Umfang einer aufgenommenen Mikroplatte seitlich nach aussen überragen kann und wobei die Aufnahme des Lifts mindestens einen Arm umfasst, welcher in der Projektion in der vertikalen Richtung, in der mindestens einen Ausnehmung angeordnet ist. Dadurch ist gewährleistet, dass der Lift die Ausnehmung im Schlitten ungehindert passieren kann. Beispielsweise umfasst der Schlitten hintere, vordere und seitliche Ausnehmungen und der Lift umfasst entsprechende hintere, vordere und seitliche Arme.

In einer Ausführungsform ist die Durchgangsöffnung im Wesentlichen rechteckig ausgebildet. Diese Form entspricht im Wesentlichen der Senkrechten Projektion der Umrisse der Mikroplatten. Dementsprechend ist die zweite Aufnahme des Liftes im Wesentlichen rechteckig ausgebildet, was eine entsprechende Form der Durchgangsöffnung bedingt.

In einer Ausführungsform messen die Abmessungen der mindestens einen Ausnehmung einen Bruchteil der Abmessungen der Durchgangsöffnung. Beispielsweise sind die hinteren und seitlichen Ausnehmungen weniger breit und weniger tief im Vergleich zur Breite und Tiefe der Durchgangsöffnung.

In einer Ausführungsform sind auf jeder Seite der Durchgangsöffnung eine, zwei oder mehr Ausnehmungen vorgesehen. Bei einer, zwei oder mehr zueinander beabstandeten Ausnehmungen, wird das Material der zweiten Aufnahme des Liftes nur wenig geschwächt. Die Anzahl der Ausnehmungen pro Seite des Schlittens korreliert mit der Anzahl der Arme des entsprechenden Liftes.

Erfindungsgemäß ist an einer in der ersten horizontalen Richtung vorderen Seite der Durchgangsöffnung eine vordere Ausnehmung vorgesehen, welche den vorderen Bereich des Schlittens zumindest abschnittsweise vollständig durchbricht, wobei der Schlitten gabelförmig Ausgestaltet ist. Durch diese Form ist es möglich, den Schlitten auch dann einzufahren, wenn der Lift hochgefahren ist.

In einer Ausführungsform umfass der Schlitten eine erste Ebene, von welcher aus sich die Durchgangsöffnung erstreckt und wobei Begrenzer vorgesehen sind, welche sich von der ersten Ebene aus nach oben in der vertikalen Richtung erstrecken, um die seitlichen Bewegungen einer im Schlitten aufgenommenen Mikroplatte beschränken zu können. Hierdurch ist es möglich, die Mikroplatte in einer bestimmten Lage auf dem Lift zu positionieren und auszurichten.

In einer Ausführungsform sind auf jeder Seite des Schlittens ein, zwei oder mehr Begrenzer vorgesehen. Durch die mehreren zueinander beabstandeten Begrenzer kann eine leichte Konstruktion bereitgestellt werden, mit welcher eine exakte Positionierung und Ausrichtung einer aufgenommenen Mikroplatte möglich ist.

In einer Ausführungsform sind auf jeder Seite der zweiten Aufnahme ein, zwei oder mehr Arme vorgesehen. Die Anzahl der Arme des Liftes korrelieren mit der Anzahl der Ausnehmungen des Schlittens.

In einer Ausführungsform sind an einem, mehreren oder allen Armen ein, zwei oder mehr Anschläge vorgesehen. Beispielsweise können die Anschläge eine Bewegung der eingesetzten Mikroplatte nach hinten, vorne oder zu einer der Seiten begrenzen, wodurch eine exakte Positionierung und Ausrichtung einer Mikroplatte möglich ist.

In einer Ausführungsform sind ein Aktuator und eine Führung vorgesehen, welche mit der zweiten Aufnahme des Liftes wirkverbunden sind und ein Verfahren der zweiten Aufnahme in der vertikalen Richtung erlauben. Beispielsweise kann der Aktuator ein Pneumatik- oder Hydraulikzylinder sein oder ein Linearantrieb, ein Spindelantrieb, ein Ketten-, Riemen- oder Zahnradantrieb. Zur Führung können herkömmliche Schienenführungen oder dergleichen eingesetzt werden.

In einer Ausführungsform sind zwei oder mehr Schlitten und eine entsprechende Anzahl von diesen zugeordneten Liften vorgesehen, wobei eine Mikroplatte mit dem mindestens einem ersten Schlitten und dem mindestens einen diesem zugeordneten ersten Lift in den Bearbeitungsbereich des Bearbeitungsgerätes einführbar ist und wobei eine Mikroplatte mit dem mindestens einen zweiten Schlitten und dem mindestens einen diesem zugeordneten zweiten Lift aus dem Bearbeitungsbereich des Bearbeitungsgerätes ausführbar ist. Durch eine solche Anordnung kann vermieden werden, dass Mikroplatten, welche in den Bearbeitungsbereich des Bearbeitungsgerätes zu bringen sind mit solchen vertauscht werden, welche aus dem Bearbeitungsbereich auszuführen sind. Der Transfer vom ersten Schlitten zum zweiten Schlitten erfolgt innerhalb des Bearbeitungsbereiches des Bearbeitungsgeräts.

In einer weiteren Ausführungsform sind ein Schlitten und eine mehrere zu Öffnungen zugeordneten Lifte vorgesehen. Eine Mikroplatte ist mit dem einem Schlitten und einem ersten Lift durch eine erste Öffnung in den Bearbeitungsbereich des Bearbeitungsgerätes einführbar und mit dem einen Schlitten und einem zweiten Lift durch eine zweite Öffnung aus dem Bearbeitungsbereich des Bearbeitungsgerätes ausführbar. Dabei ist der eine Schlitten innerhalb des Bearbeitungsbereiches des Bearbeitungsgeräts in Y Richtung verschiebbar. Dadurch wird beispielsweise eine Stapelverarbeitung von Mikroplatten ermöglicht.

Die erwähnten Ausführungsformen des Mikroplatten-Bearbeitungsgeräts lassen sich in beliebiger Kombination einsetzen, sofern sie sich nicht widersprechen.

Ein erfindungsgemässes Mikroplatten-Bearbeitungssystem umfasst mindestens ein Mikroplatten-Bearbeitungsgerät nach einem der vorangehenden Ausführungsformen und umfasst weiter mindestens eine der Komponenten ausgewählt aus der Gruppe umfassend Lagereinheit, Wasch- oder Dispensiervorrichtung und Manipulator, wobei jede Komponente in der vertikalen Richtung über einem der Lifte angeordnet ist. Das Mikroplatten-Bearbeitungsgerät kann beliebig mit herkömmlichen Komponenten oder Geräten kombiniert werden, welche im Zusammenhang mit Mikroplatten verwendet werden können, was die Einsatzmöglichkeiten des Mikroplatten-Bearbeitungsgeräts markant vergrössert. In einer Lagereinheit können neue und/oder bereits verwendete Mikroplatten gelagert werden. Beispielsweise kann die Lagerung eine vertikale Stapelung der Mikroplatten in einem Gehäuse oder in einem Rahmen umfassen. Mit Wasch- oder Dispensiervorrichtungen können Flüssigkeiten den Mikroplatten zugeführt werden oder aus diesen abgesaugt werden. Ein Manipulator kann beispielsweise Greifer umfassen, mit welchen eine auf einem Lift aufgesetzte Mikroplatte gefasst und örtlich bewegt werden kann. Die Bewegung ist in allen Richtungen möglich und zusätzlich kann der Greifer eine Schwenk- oder Drehbewegung ausführen, um Mikroplatten zu positionieren oder auszurichten.

Ein erfindungsgemässes Verfahren zum Einführen von Mikroplatten in einen Bearbeitungsbereich eins Mikroplatten-Bearbeitungsgeräts nach einer der vorangehenden Ausführungsformen umfasst die Schritte:
- Ausfahren des Schlittens von einer Innenposition aus dem Bearbeitungsbereich des Bearbeitungsgeräts in eine Aussenposition;
- Hochfahren der zweiten Aufnahme des mindestens einen Lifts in der vertikalen Richtung von einer unteren Position durch die Durchgangsöffnung des Schlittens und über diesen hinaus in eine obere Position;
- Anordnen einer Mikroplatte auf der zweiten Aufnahme;
- Absenken der zweiten Aufnahme von der oberen Position in die untere Position;
- Anordnen der Mikroplatte auf den Schlitten; und
- Einfahren des Schlittens von der Aussenposition in die Innenposition.

In einer Ausführungsform erfolgt das Anordnen der Mikroplatte durch eine der Komponenten ausgewählt aus der Gruppe umfassend Lagereinheit und Manipulator.

Ein erfindungsgemässes Verfahren zum Ausführen von Mikroplatten aus einem Bearbeitungsbereich eines Mikroplatten-Bearbeitungsgeräts nach einer der vorangehenden Ausführungsformen definiert Anspruch 15.

In einer Ausführungsform erfolgt das Entfernen der Mikroplatte durch eine der Komponenten ausgewählt aus der Gruppe umfassend Lagereinheit und Manipulator.

Die erwähnten Ausführungsformen der Verfahren lassen sich in beliebiger Kombination einsetzen, sofern sie sich nicht widersprechen.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
Fig. 1 eine perspektivische Darstellung eines erfindungsgemässen Mikroplatten-Bearbeitungsgeräts;
Fig. 2 eine perspektivische Darstellung eines Schlittens des Mikroplatten-Bearbeitungsgeräts der Figur 1;
Fig. 3 eine perspektivische Darstellung eines Liftes des Mikroplatten-Bearbeitungsgeräts der Figur 1;
Fig. 4 eine schematische seitliche Schnittansicht durch einen Lift mit einer darauf eingesetzten Mikroplatte;
Fig. 5 eine schematische perspektivische Darstellung einer Ausführungsform einer Aufnahme eines Liftes;
Fig. 6 eine schematische perspektivische Darstellung einer weiteren Ausführungsform einer Aufnahme eines Lifts;
Fig. 7 eine perspektivische Schnittansicht des Mikroplatten-Bearbeitungsgeräts der Figur 1 mit einer Lagereinheit;
Fig. 8 eine schematische Darstellung der Teilschritte zur Entnahme oder Einführung einer Mikroplatte aus oder in die Lagereinheit der Figur 7;
Fig. 9 eine schematische Schnittansicht durch den Schlitten und den Lift des Mikroplatten-Bearbeitungsgeräts und durch eine Wasch- und/oder Dispensiervorrichtung; und
Fig. 10 eine schematische perspektivische Darstellung des Mikroplatten-Bearbeitungsgeräts in einem Mikroplatten-Bearbeitungssystem mit einem Manipulator und einer Pipettier-Vorrichtung.

### DETAILLIERTE BESCHREIBUNG DER ERFINDUNG

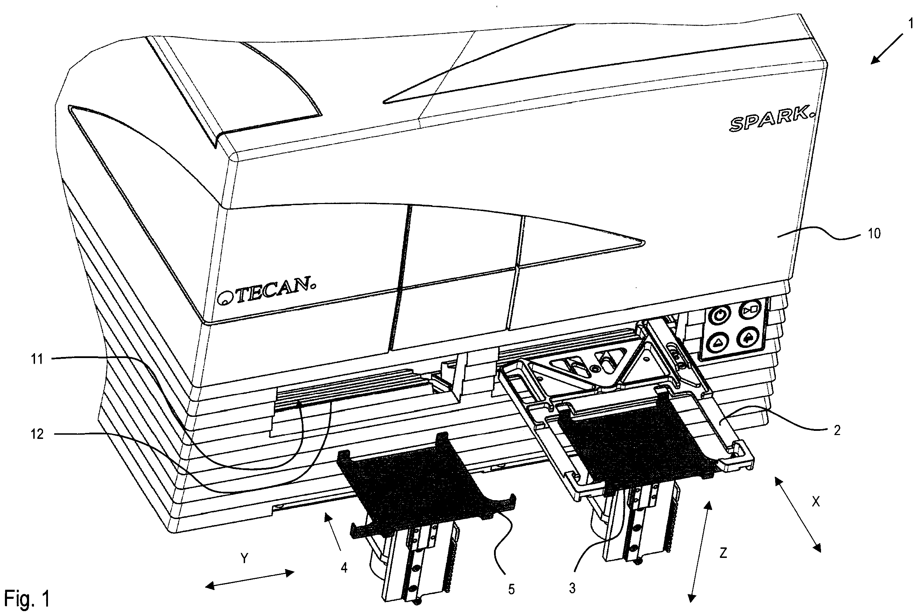

Die Figur 1 zeigt eine perspektivische Darstellung eines erfindungsgemässen Mikroplatten-Bearbeitungsgeräts 1. In einer ersten horizontalen Richtung X sind stirnseitig aufklappbare Öffnungen 11 nebeneinander in einer zweiten horizontalen Richtung Y an einem Gehäuse 10 vorgesehen, wobei das Gehäuse 10 einen Bearbeitungsbereich im Wesentlichen vollständig umschliesst. Aus jeder Öffnung 11 ist ein Schlitten 2, 4 horizontal in der X-Richtung ausfahrbar, wobei jede der Öffnungen durch eine in das Innere des Bearbeitungsgeräts 1 schwenkbare Klappe 12 verschliessbar ist. In der X-Richtung vor dem Gehäuse 10 ist vor jeder Öffnung 11 ein Lift 3, 5 angeordnet, welcher in der vertikalen Richtung Z verfahrbar ist. Jeder Schlitten 2, 4 kann derart weit aus dem Gehäuse 10 ausgefahren werden, dass die in der X-Richtung gegen einen Benutzer gerichtete Vorderkante eines jeden Schlittens 2, 4 in einem Bereich der Vorderkante eines Jeden Lifts 3, 5 zu liegen kommt. Jeder Schlitten 2, 4 ragt in der Y-Richtung auf beiden Seiten über den entsprechenden Lift 3, 5.

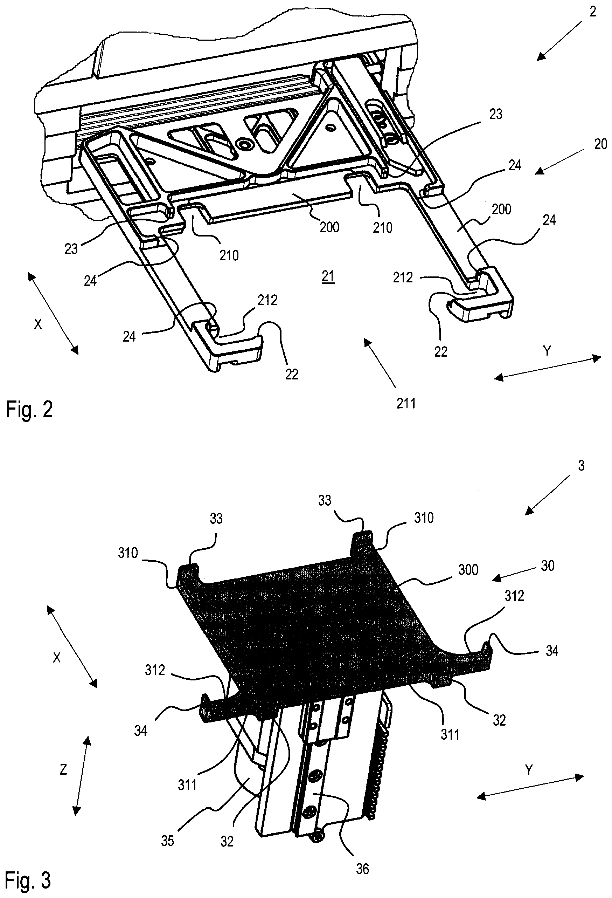

Die Figur 2 zeigt eine perspektivische Darstellung eines Schlittens 2 des Mikroplatten-Bearbeitungsgeräts 1 der Figur 1. Der Schlitten 2 ist im Wesentlichen plattenförmig mit seitlichen Ausdehnungen in der X- und Y-Richtung und mit einer Dicke in der Z-Richtung. Der Schlitten 2 umfasst eine erste Aufnahme 20 mit einer ersten Ebene 200 auf welcher eine Mikroplatte aufgenommen werden kann. Im Bereich der ersten Aufnahme 20 ist eine Durchgangsöffnung 21 vorgesehen, welche sich in der Z-Richtung vollständig durch den Schlitten 2 erstreckt. Die Durchgangsöffnung 21 ist bezüglich der X-Richtung in einem vorderen Bereich des Schlittens 2 angeordnet. Die um die Durchgansöffnung 21 verbleibenden seitlichen Bereiche und der verbleibende vordere Bereich bilden im Wesentlichen Stege, welche die Durchgangsöffnung 21 seitlich und nach vorne begrenzen. Anschliessend an die Durchgangsöffnung 21 sind zwei hintere Ausnehmungen 210 gemeinsam mit der Durchgangsöffnung 21 ausgebildet. Die beiden hinteren Ausnehmungen 210 sind zueinander und jeweils von einem der Ränder in der Y-Richtung der Durchgangsöffnung 21 beabstandet. Anschliessend an die Durchgangsöffnung 21 ist eine vordere Ausnehmung 211 gemeinsam mit der Durchgangsöffnung 21 ausgebildet. Die vordere Ausnehmung 211 durchbricht die in der X-Richtung vordere Kante des Schlittens 2 vollständig, wodurch sich eine gabelförmige Ausgestaltung des Schlittens 2 ergibt. Anschliessend an die Durchgangsöffnung 21 ist im vorderen Bereich der Durchgangsöffnung 21 auf jeder Seite der Durchgangsöffnung 21 eine seitliche Ausnehmung 212 vorgesehen, welche gemeinsam mit der Durchgangsöffnung 21 ausgebildet ist. Die seitlichen Ausnehmungen 212 sind im Wesentlichen im vorderen Eckbereich der Durchgangsöffnung 21 angeordnet. Von der ersten Ebene 200 an erstrecken sich Begrenzer 22, 23, 24 im Wesentlichen senkrecht nach oben entlang der Z-Richtung. Jeder Begrenzer 22, 23, 24 hat einen horizontalen Abstand von der Durchgangsöffnung 21 von einigen Millimetern, beispielsweise 1 bis 5 Millimeter. Die vorderen Begrenzer 22 erstrecken sich vom verbleibenden Teil des vorderen Steges über eine Länge von einigen Millimetern, beispielsweise 1 bis 5 Millimeter nach oben. Die hinteren Begrenzer 23 erstrecken sich benachbart und beabstandet zu den hinteren Ausnehmungen 210 über die gleiche Länge nach oben. Der Abstand beträgt einige Millimeter, beispielsweise 1 bis 5 Millimeter. Jeder der beiden hinteren Begrenzer 23 ist seitlich ausserhalb neben der entsprechenden hinteren Ausnehmung 210 angeordnet. Die seitlichen Begrenzer 23 erstrecken sich anschliessend an die seitlichen Ausnehmungen 212 im Wesentlichen senkrecht über die gleiche Länge nach oben. Die beiden seitlichen Begrenzer 24, welche im vorderen Bereich des Schlittens 2 angeordnet sind, erstrecken sich gemeinsam einstückig mit den benachbarten vorderen Begrenzer 22 von der ersten Ebene 200 an. Die beiden seitlichen Begrenzer 24, welche im hinteren Bereich des Schlittens 2 angeordnet sind, erstrecken sich jeweils beabstandet zum jeweiligen benachbarten hinteren Begrenzer 23 von der ersten Ebene 200 an.

Die Figur 3 zeigt eine perspektivische Darstellung eines Liftes 3 des Mikroplatten-Bearbeitungsgeräts 1 der Figur 1. Der Lift 3 umfasst eine zweite Aufnahme 30, welche eine zweite Ebene 300 umfasst, auf welcher Mikroplatten angeordnet werden können. Die zweite Aufnahme 30 umfasst im Wesentlichen eine rechteckige Platte, deren obere Fläche die zweite Ebene 300 umfasst. Von der rechteckigen Platte erstrecken sich Arme 310, 311, 312 horizontal seitlich von der Platte weg. Hintere Arme 310 erstrecken sich von der hinteren Kante, anschliessend an jeweils eine der beiden hinteren Ecken, in der X-Richtung nach hinten. Vordere Arme 311 erstrecken sich von der vorderen Kante, bezüglich der Y-Richtung fluchtend mit den hinteren Armen 310, in der X-Richtung nach vorne. Seitliche Arme 312 erstrecken sich von der seitlichen Kante, anschliessend an jeweils eine der beiden vorderen Ecken, in der Y-Richtung seitlich nach aussen, wobei die vorderen Flächen der seitlichen Arme 312 fluchtend mit der vorderen Fläche der Platte der Aufnahme 30 ausgebildet ist. An den freien Enden jedes Armes 310, 311, 312 erstreckt sich ein Anschlag 32, 33, 34 von der zweiten Ebene 300 an in der Z-Richtung senkrecht nach oben. Ein vorderer Anschlag 32 ist am vorderen freien Ende eines jeden vorderen Armes 311 angeordnet, ein hinterer Anschlag 33 ist am hinteren freien Ende eines jeden hinteren Armes 310 angeordnet und ein seitlicher Anschlag 34 ist am seitlichen freien Ende eines jeden seitlichen Armes 312 angeordnet. Die zweite Aufnahme 30 des Liftes 3 ist in der Z-Richtung durch eine Führung geführt und um die Z-Achse gegen eine Verdrehung gesichert und kann durch einen Aktuator 35 in der Z-Richtung kontrolliert bewegt werden. Der Verfahrweg des Liftes 3 wird durch den Verfahrweg des Aktuators 35 und den der Schiene 36 festgelegt.

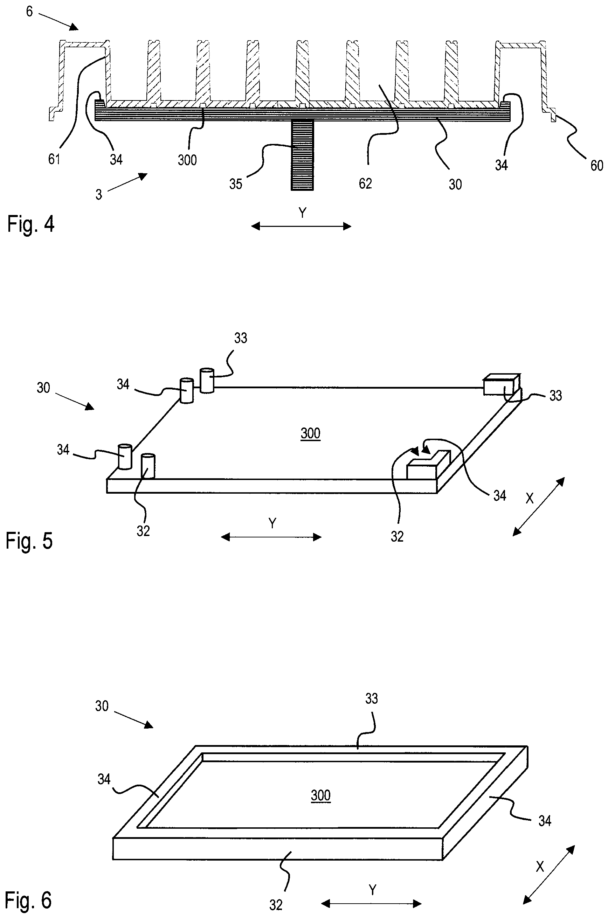

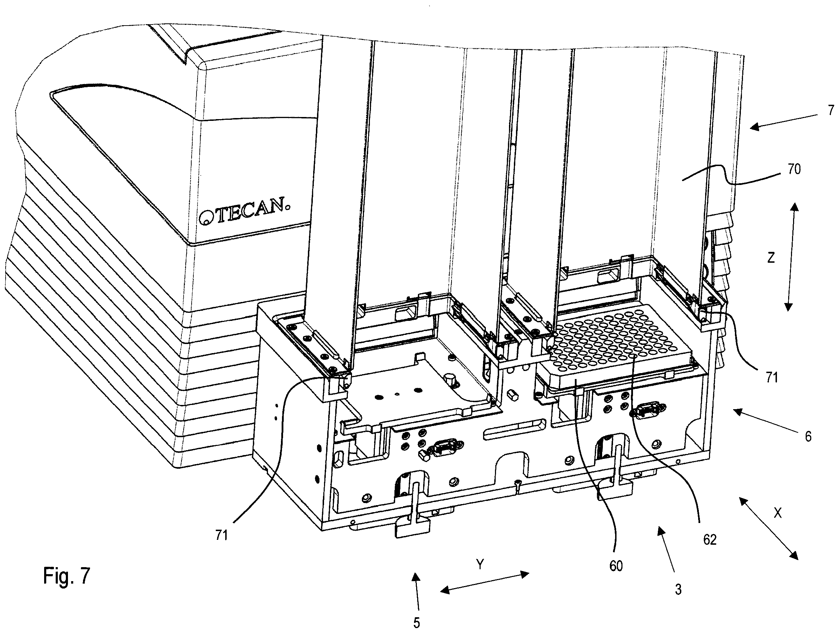

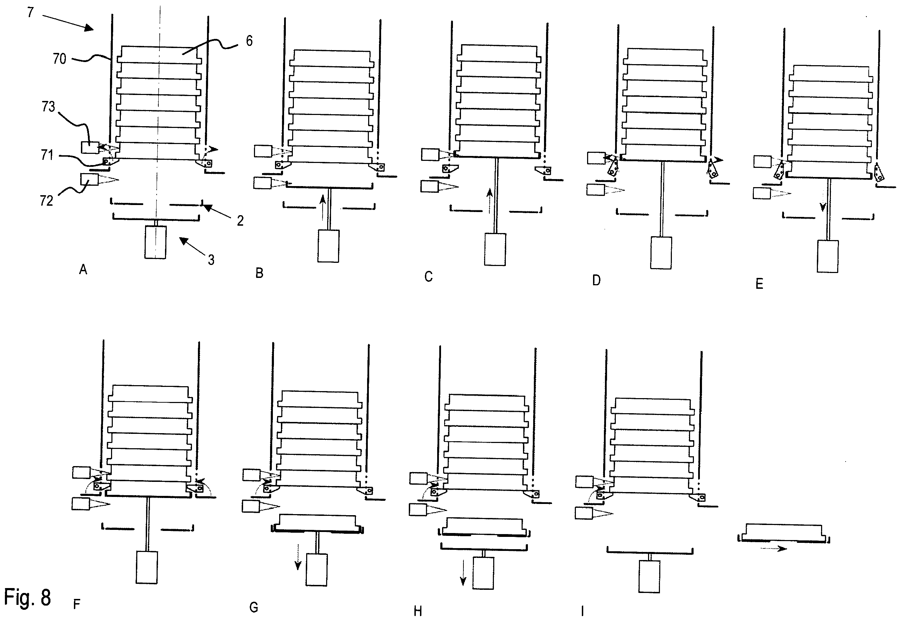

Die Figur 4 zeigt eine schematische seitliche Schnittansicht durch einen Lift 3 mit einer darauf eingesetzten Mikroplatte 6. Die Mikroplatte 6 legt mit dem Boden der Kavitäten 62 auf der zweiten Ebene 300 der zweiten Aufnahme 30 auf. Die Seitliche Bewegung der Mikroplatte 6 in der Y-Richtung ist durch die seitlichen Anschläge 34 begrenzt. Die vorderen und hinteren Anschläge 32, 33 können mit einer inneren Seitenwand der Mikroplatte 6 in Kontakt sein. Eine seitliche innere Seitenwand 61 der Mikroplatte 6, welche auch eine Seitenwand der äussersten Kavitäten 62 sein kann, ist im Kontakt mit den seitlichen Anschlägen 34. Alternativ kann die Mikroplatte 6 mit ihren äusseren Seitenwänden 60 auf der zweiten Ebene 300 aufliegen und mit den äusseren Seitenwänden 60 mit den Anschlägen 32, 33, 34 in Kontakt sein, wie dies in den Figuren 7 und 8 dargestellt ist. Alternativ können gewisse Anschläge der zweiten Aufnahme an der äusseren Seitenwand der Mikroplatte anschlagen und andere Anschläge der zweiten Aufnahme an der inneren Seitenwand.

Die Figur 5 zeigt eine schematische perspektivische Darstellung einer Ausführungsform einer Aufnahme 30 eines Liftes 3 mit sich voneinander beabstandeten oder mit sich gemeinsam einstückig erstreckenden Anschlägen. Auf der bezüglich der Y-Richtung linken Seite der dargestellten Aufnahme 30 erstrecken sich alle Anschläge beabstandet zueinander von der zweiten Ebene 300 an. Dargestellt sind zylinderförmige Anschläge. Auf der bezüglich der Y-Richtung rechten Seite der dargestellten Aufnahme 30 erstreckt sich der vordere Anschlag 32 beabstandet vom hinteren Anschlag 33. Wovon sich der vordere Anschlag 32 gemeinsam einstückig mit dem vorderen seitlichen Anschlag 34 erstreckt. In der dargestellten Ausführungsform ist kein hinterer seitlicher Anschlag vorgesehen. Es ist jedoch auch möglich einen solchen vorzusehen. Selbstverständlich können alle möglichen Kombinationen von sich zueinander getrennt erstreckenden Anschlägen und von sich gemeinsam einstückig miteinander erstreckenden Anschlägen realisiert werden.

Die Figur 6 zeigt eine schematische perspektivische Darstellung einer weiteren Ausführungsform einer Aufnahme 30 eines Lifts 3. Dargestellt ist eine zweite Aufnahme 30, bei welcher sich alle Anschläge 32, 33, 34 gemeinsam einstückig miteinander von der zweiten Ebene 300 an erstrecken und zusammen einen geschlossenen Rahmen bilden.

Die Figur 7 zeigt eine perspektivische Schnittansicht des Mikroplatten-Bearbeitungsgeräts 1 der Figur 1 mit einer Lagereinheit 7. Jeweils eine Lagereinheit 7 ist in der Z-Richtung senkrecht über einem Lift 3, 5 angeordnet. Die Lagereinheit 7 umfasst ein Gehäuse 70, in welchem Mikroplatten 6 in der Z-Richtung übereinander stapelbar sind. Verriegelungselemente 71 verhindern, dass die sich im Gehäuse 70 befindlichen Mikroplatten 6 eine untere Gehäuseöffnung frei passieren können.

Die Figur 8 zeigt eine schematische Darstellung der Teilschritte zur Entnahme oder Einführung einer Mikroplatte 6 aus oder in die Lagereinheit 7 der Figur 7. Anschliessend an die untere Gehäuseöffnung sind seitlich am Gehäuse 70 die Verriegelungselemente 71 angeordnet. Unterhalb der Gehäuseöffnung und oberhalb der Verriegelungselemente 71 sind Sensoren 72, 73 angeordnet, mit welchen erkannt werden kann, ob sich im Bereich vor dem jeweiligen Sensor 72, 73 eine Mikroplatte 6 befindet. Nachfolgend wird beschrieben, wie eine Mikroplatte 6 aus der Lagereinheit geholt werden kann. Die Figur 8A zeigt einen leeren ausgefahrenen Schlitten 2 und einen leeren Lift 3, der sich in einer Position unterhalb des Schlittens 2 befindet. Die Figur 8B zeigt wie ein erster Sensor 72 überprüft, ob sich auf dem Lift 3 eine Mikroplatte befindet. Ist keine Mikroplatte erkannt worden, darf der Lift weiter mit der zweiten Aufnahme in das Gehäuse der Lagereinheit über die Verriegelungselemente 71 hochfahren, siehe Figur 8C. Ein über den Verriegelungselementen 71 angeordneter zweiter Sensor 73 zeigt an, ob sich in der Lagereinheit 7 überhaupt eine Mikroplatte 6 befindet und beendet den Prozess, wenn dem nicht so ist. Der Benutzer kann auf das Fehlen von Mikroplatten akustisch und/oder optisch aufmerksam gemacht werden. Wenn sich mindestens eine Mikroplatte in der Lagereinheit befindet, wird der Prozess fortgesetzt. Nachdem eine Mikroplatte 6 aufgenommen wurde, schwenken die Verriegelungselemente 71 zur Seite und geben die untere Gehäuseöffnung der Lagereinheit 7 frei, siehe Figur 8D. Anschliessend wird der Lift 3 abgesenkt bis die aufgenommene Mikroplatte 6 den Eingriffsbereich der Verriegelungselemente 71 passiert hat, siehe Figur 8E. Optional kann mittels des ersten Sensors 72 die Höhe der Mikroplatte bestimmt werden. Optional kann der zweite Sensor 73 anzeigen, dass die Mikroplatte den Eingriffsbereich passiert hat. Die Verriegelungselemente 71 werden in den Eingriffsbereich geschwenkt, wodurch darüberliegende Mikroplatten zurückgehalten werden, siehe Figur 8F, der Lift 3 wird weiter runtergefahren, siehe Figur 8G, wobei die auf dem Lift 3 aufgenommene Mikroplatte 6 beim Passieren des Schlittens 2 auf diesem liegen bleibt, siehe Figur 8H. Anschliessend kann der Schlitten 2 mit der darauf angeordneten Mikroplatte 6 in den

Bearbeitungsbereich des Mikroplatten-Bearbeitungsgeräts eingefahren werden, siehe Figur 8I. Soll eine Mikroplatte 6 in die Lagereinheit 7 eingeführt werden, so wird die Mikroplatte durch den Lift vom Schlitten übernommen, der erste Sensor 72 überprüft, ob sich auch tatsächlich eine Mikroplatte auf dem Lift befindet, der Lift fährt in der Lagereinheit über die Verriegelungselemente bis die Mikroplatte die Verriegelungselemente passiert hat. Optional kann das Passieren durch den zweiten Sensor erkannt werden. Anschliessend wird der Lift wieder abgesenkt. Die Verriegelungselemente können vorgespannt sein, sodass sie durch eine Kraft von unten nach oben weggedrückt werden können und sich beim Fehlen einer solchen Kraft selbstständig wieder nach unten bewegen. Durch einen Aktuator können die Verriegelungselemente nach oben weggeschwenkt werden.

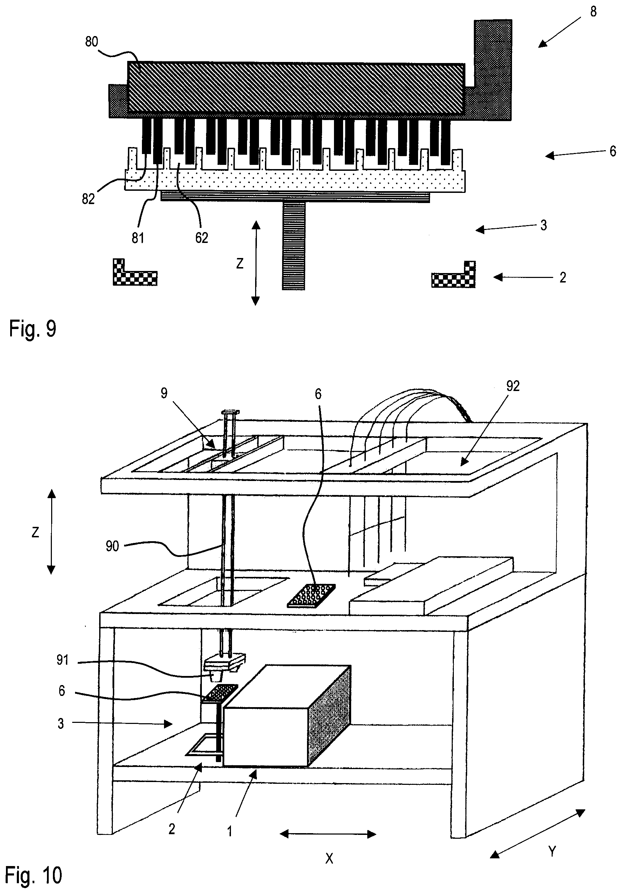

Die Figur 9 zeigt eine schematische Schnittansicht durch den Schlitten 2 und den Lift 3 des Mikroplatten-Bearbeitungsgeräts und durch eine Wasch-und/oder Dispensiervorrichtung 8. Die Wasch-und/oder Dispensiervorrichtung 8 umfasst einen beweglichen Kopf 80, an welchem Kanülen 81, 82 in einer Reihe angeordnet sind, wobei mit den Kanülen Flüssigkeiten den Kavitäten 62 einer Mikroplatte 6 zugeführt und/oder abgesaugt werden können. Üblicherweise sind die Absaugkanülen 81 länger ausgebildet als die Dispenskanülen 82. Zum Zuführen oder zum Absaugen von Flüssigkeit zu/aus den Kavitäten werden die Kanülen in die Kavitäten abgesenkt. Da Mikroplatten 6 mehrere nebeneinander angeordnete Reichen von Kavitäten umfassen, müssen die Kanülen von einer Reihe zur nächsten aus den Kavitäten ausgefahren werden, damit sie nicht mit der Mikroplatte kollidieren. Da in der vorliegenden Erfindung die vertikale Bewegung in der Z-Richtung durch den Lift 3 ausgeführt werden kann, muss der Kopf der Wasch-und/oder Dispensiervorrichtung 8 nur noch in einer horizontalen Richtung verfahrbar sein, was eine Vereinfachung der der Vorrichtung bewirkt, welche weniger Platz in der Vertikalen und der Horizontalen benötigt. Der Lift 3 hebt die Mikroplatte 6 zum Absaugen von Flüssigkeit bis zu einer ersten oberen Position, bei der sich die Absaugkanülen 81 knapp über dem Boden der Kavitäten 62 befinden. Danach senkt der Lift die Mikroplatte zum Dispensieren zu einer zweiten oberen Position ab, bei der die Absaugkanülen 81 oberhalb des Randes der Kavitäten 62 befindet. Alternativ kann der Kopf nur eine oder mehrere Kanülen aufweisen. In diesem Fall muss der Kopf in beiden horizontalen Richtungen X und Y verfahrbar sein. Dennoch ergibt sich ein reduzierter Platzbedarf in der vertikalen Z-Richtung.

Die Figur 10 zeigt eine schematische perspektivische Darstellung des Mikroplatten-Bearbeitungsgeräts 1 in einem Mikroplatten-Bearbeitungssystem mit einem Manipulator 9 und einer Pipettier-Vorrichtung 92. In der Z-Richtung ist über dem Lift 3 ein Manipulator 9 mit einem Arm 90 vorgesehen, wobei am unteren freien Ende des Arms 90 Greifer 91 vorgesehen sind, mit welchen eine Mikroplatte 6 seitlich gefasst werden kann. Die auf dem Lift 3 aufgenommene Mikroplatte 6 ist in der hochgefahrenen Stellung des Liftes 3 von der Seite frei zugänglich, was das Greifen mit den Greifern 91 des Manipulators 9 wesentlich erleichtert. Zudem reduziert sich der benötigte vertikale Verfahrweg des Manipulators in der Z-Richtung um die Länge, welche der Lift 3 die aufgenommene Mikroplatte anheben kann, wodurch sich die Bauhöhe des Manipulators in der Z-Richtung reduziert. Der Arm 90 kann in beiden horizontalen Richtungen X, Y verfahrbar sein, wodurch die Mikroplatte oberhalb und seitlich versetzt zum Mikroplatten-Bearbeitungsgerät 1 mit dem Manipulator platziert werden kann. Beispielsweise kann die Mikroplatte auf einer Arbeitsfläche oder in einer weiteren Vorrichtung, beispielsweise einer Pipettier-Vorrichtung platziert werden.

### BEZUGSZEICHENLISTE

| | | | |
|---|---|---|---|
| 1 | Mikroplatten-Bearbeitungsgerät | 34 | seitlicher Anschlag |
| | | 35 | Aktuator |
| 10 | Gehäuse | 36 | Führung |
| 11 | Öffnung | 4 | zweiter Schlitten |
| 12 | Klappe | 5 | zweiter Lift |
| 2 | erster Schlitten | 6 | Mikroplatte |
| 20 | erste Aufnahme | 60 | äussere Seitenwand |
| 200 | erste Ebene | 61 | innere Seitenwand |
| 21 | Durchgangsöffnung | 62 | Kavität |
| 210 | hintere Ausnehmung | 7 | Lagereinheit |
| 211 | vordere Ausnehmung | 70 | Gehäuse |
| 212 | seitliche Ausnehmung | 71 | Verriegelungselement |
| 22 | vorderer Begrenzer | 72 | erster Sensor |
| 23 | hinterer Begrenzer | 73 | zweiter Sensor |
| 24 | seitlicher Begrenzer | 8 | Wasch-/ Dispensiervorrichtung |
| 3 | erster Lift | | |
| 30 | zweite Aufnahme | 80 | Kopf |
| 300 | zweite Ebene | 81 | Absaugkanüle |
| 310 | hinterer Arm | 82 | Dispenskanüle |
| 311 | vorderer Arm | 9 | Manipulator |
| 312 | seitlicher Arm | 90 | Arm |
| 32 | vorderer Anschlag | 91 | Greifer |
| 33 | hinterer Anschlag | 92 | Pipettier-Vorrichtung |
| X | erste horizontale Richtung | Z | vertikale Richtung |
| Y | zweite horizontale Richtung | | |

## Patentansprüche

1. Ein Mikroplatten-Bearbeitungsgerät (1) umfassend mindestens einen Schlitten (2, 4) mit einer ersten Aufnahme (20) für Mikroplatten (6), wobei der mindestens eine Schlitten (2, 4) in einer ersten horizontalen Richtung (X) linear verfahrbar ist, wodurch die Mikroplatten (6) mit dem mindestens einen Schlitten (2, 4) in einen Bearbeitungsbereich des Bearbeitungsgeräts (1) einführbar, bzw. aus dem Bearbeitungsbereich ausführbar sind, mindestens einen Lift (3, 5), welcher in einer vertikalen Richtung (Z) verfahrbar ist, wodurch die Mikroplatten (6) dem Schlitten (2, 4) entnehmbar, bzw. zuführbar sind, wobei der Schlitten (2, 4) eine Durchgangsöffnung (21) umfasst,
deren Umfang, in der vertikalen Projektion, den Umfang einer im Schlitten (2, 4) aufgenommenen Mikroplatte (6) zumindest teilweise horizontal nach innen unterragt und wobei
der Lift (3, 5) eine zweite Aufnahme (30) für Mikroplatten (6) umfasst, deren Umfang, in der vertikalen Projektion, den Umfang der Durchgangsöffnung (21) unterragt, wodurch die zweite Aufnahme (30), in der vertikalen Richtung (Z) ungehindert durch die Durchgangsöffnung (21) verfahrbar ist, **dadurch gekennzeichnet, dass**
die Durchgangsöffnung (21) des Schlittens (2) mindestens eine Ausnehmung (210, 211, 212) umfasst, welche den Umfang einer aufgenommenen Mikroplatte (6) seitlich nach aussen überragt und dass die zweite Aufnahme (30) des Lifts (3, 5) mindestens einen Arm (310, 311, 312) umfasst, welcher in der Projektion in der vertikalen Richtung (Z), in der mindestens einen Ausnehmung (210, 211, 212) angeordnet ist, wobei an einer in der ersten horizontalen Richtung (X) vorderen Seite der Durchgangsöffnung (21) eine vordere Ausnehmung (211) vorgesehen ist, welche den vorderen Bereich des Schlittens (2, 4) zumindest abschnittsweise vollständig durchbricht, wodurch sich eine gabelförmige Ausgestaltung des Schlittens (2, 4) ergibt.

2. Das Mikroplatten-Bearbeitungsgerät (1) nach Anspruch 1, wobei die zweite Aufnahme (30) mindestens einen Anschlag (32, 33, 34) umfasst, welcher sich von einer zweiten Ebene (300) aus im Wesentlichen in der vertikalen Richtung (Z) nach oben erstreckt.

3. Das Mikroplatten-Bearbeitungsgerät (1) nach Anspruch 2, wobei die Anschläge (32, 33, 34) derart angeordnet und ausgebildet sind, dass sie an einer inneren Seitenwand (61) einer in der zweiten Aufnahme (30) aufgenommenen Mikroplatte (6) anliegen können.

4. Das Mikroplatten-Bearbeitungsgerät (1) nach Anspruch 2, wobei die Anschläge (32, 33, 34) derart angeordnet und ausgebildet sind, dass sie an einer äusseren Seitenwand (60) einer in der zweiten Aufnahme (30) aufgenommenen Mikroplatte (6) anliegen können.

5. Das Mikroplatten-Bearbeitungsgerät (1) nach einem der vorangehenden Ansprüche, wobei die Durchgangsöffnung (21) im Wesentlichen rechteckig ausgebildet ist.

6. Das Mikroplatten-Bearbeitungsgerät (1) nach Anspruch 1 oder 5, wobei auf jeder Seite der Durchgangsöffnung (21) eine, zwei oder mehr Ausnehmungen (210, 211, 212) vorgesehen sind.

7. Das Mikroplatten-Bearbeitungsgerät (1) nach einem der vorangehenden Ansprüche, wobei der Schlitten (2, 4) eine erste Ebene (200) umfasst, von welcher aus sich die Durchgangsöffnung (21) erstreckt und wobei Begrenzer (22, 23, 24) vorgesehen sind, welche sich von der ersten Ebene (200) aus nach oben in der vertikalen Richtung (Z) erstrecken, um die seitlichen Bewegungen einer im Schlitten (2, 4) aufgenommenen Mikroplatte (6) beschränken zu können.

8. Das Mikroplatten-Bearbeitungsgerät (1) nach einem der vorangehenden Ansprüche, wobei auf jeder Seite der zweiten Aufnahme (30) ein, zwei oder mehr Arme (310, 311, 312) vorgesehen sind.

9. Das Mikroplatten-Bearbeitungsgerät (1) nach einem der Ansprüche 1 bis 8, wobei an einem, mehrerer oder aller Arme (310, 311, 312) ein, zwei oder mehr Anschläge (32, 33, 34) vorgesehen sind.

10. Das Mikroplatten-Bearbeitungsgerät (1) nach einem der vorangehenden Ansprüche, wobei ein Aktuator (35) und eine Führung (36) vorgesehen sind, welche mit der zweiten Aufnahme (30) des Liftes (3, 5) wirkverbunden sind und ein Verfahren der zweiten Aufnahme (30) in der vertikalen Richtung (Z) erlauben.

11. Das Mikroplatten-Bearbeitungsgerät (1) nach einem der vorangehenden Ansprüche, wobei zwei oder mehr Schlitten (2, 4) und zwei oder mehr diesen zugeordnete Lifte (3, 5) vorgesehen sind, wobei Mikroplatten (6) mit mindestens einem ersten Schlitten (2) und dem mindestens einen zugeordneten ersten Lift (3) in den Bearbeitungsbereich des Bearbeitungsgerätes (1) einführbar sind und wobei Mikroplatten (6) mit mindestens einem zweiten Schlitten (4) und dem mindestens einen zugeordneten zweiten Lift (5) aus dem Bearbeitungsbereich des Bearbeitungsgerätes (1) ausführbar sind.

12. Ein Mikroplatten-Bearbeitungssystem umfassend mindestens ein Mikroplatten-Bearbeitungsgerät (1) nach einem der vorangehenden Ansprüche und weiter umfassend mindestens eine der Komponenten ausgewählt aus der Gruppe umfassend Lagereinheit (7), Wasch- oder Dispensiervorrichtung (8) und Manipulator (9), wobei jede Komponente in der vertikalen Richtung (Z) über einem der Lifte (3, 5) angeordnet ist.

13. Ein Verfahren zum Einführen von Mikroplatten (6) in einen Bearbeitungsbereich eins Mikroplatten-Bearbeitungsgeräts (1) nach einem der Ansprüche 1 bis 11 umfassend die Schritte:
- Ausfahren des Schlittens (2, 4) von einer Innenposition aus dem Bearbeitungsbereich des Bearbeitungsgeräts (1) in eine Aussenposition;
- Hochfahren der zweiten Aufnahme (30) des mindestens einen Lifts (3, 5) in der vertikalen Richtung (Z) von einer unteren Position durch die Durchgangsöffnung (21) des Schlittens (2, 4) und über diesen hinaus in eine obere Position;
- Anordnen einer Mikroplatte (6) auf der zweiten Aufnahme (30);
- Absenken der zweiten Aufnahme (30) von der oberen Position in die untere Position;
- Anordnen der Mikroplatte (6) auf den Schlitten (2, 4); und
- Einfahren des Schlittens (2, 4) von der Aussenposition in die Innenposition.

14. Das Verfahren nach Anspruch 13, wobei das Anordnen der Mikroplatte (6) durch eine der Komponenten ausgewählt aus der Gruppe umfassend Lagereinheit (7) und Manipulator (9) erfolgt.

15. Ein Verfahren zum Ausführen von Mikroplatten (6) aus einem Bearbeitungsbereich eines Mikroplatten-Bearbeitungsgeräts (1) nach einem der Ansprüche 1 bis 11 umfassend die Schritte:
- Ausfahren des mit einer Mikroplatte (6) bestückten Schlittens (2, 4) von einer Innenposition aus dem Bearbeitungsbereich des Bearbeitungsgeräts (1) in eine Aussenposition;
- Hochfahren der zweiten Aufnahme (30) des mindestens einen Lifts (3, 5) in der vertikalen Richtung (Z) von einer unteren Position durch die Durchgansöffnung (21) des Schlittens (2, 4) und über diesen hinaus in eine obere Position;
- Anordnen einer Mikroplatte (6) auf der zweiten Aufnahme (30);
- Einfahren des Schlittens (2, 4) von der Aussenposition in die Innenposition;
- Entfernen der Mikroplatte (6) von der zweiten Aufnahme (30); und
- Absenken der zweiten Aufnahme (30) von der oberen Position in die untere Position.

16. Das Verfahren nach Anspruch 15, wobei das Entfernen der Mikroplatte (6) durch eine der Komponenten ausgewählt aus der Gruppe umfassend Lagereinheit (7) und Manipulator (9) erfolgt.

## Claims

1. A microplate processing apparatus (1), comprising at least one slide (2, 4) having a first receptacle (20) for microplates (6), wherein the at least one slide (2, 4) can be moved linearly in a first horizontal direction (X), whereby the microplates (6) can be introduced with the at least one slide (2, 4) into a processing area of the processing apparatus (1) or removed from the processing area,
at least one lift (3, 5), which can be moved in a vertical direction (Z), whereby the microplates (6) can be removed from the slide (2, 4) or fed to the slide (2, 4), wherein
the slide (2, 4) comprises a passage opening (21), the circumference of which, in the vertical projection, projects at least partially horizontally inwards below the circumference of a microplate (6) accommodated in the slide (2, 4), and wherein the lift (3, 5) comprises a second receptacle (30) for microplates (6), the circumference of which, in the vertical projection, projects below the circumference of the passage opening (21), whereby the second receptacle (30) can be moved unhindered in the vertical direction (Z) through the passage opening (21), **characterized in that**
the passage opening (21) of the slide (2) comprises at least one recess (210, 211, 212) which projects laterally outwards beyond the circumference of an accommodated microplate (6), and **in that** the second receptacle (30) of the lift (3, 5) comprises at least one arm (310, 311, 312) which, in the projection in the vertical direction (Z), is arranged in the at least one recess (210, 211, 212), wherein a front recess (211) is provided on a front side of the passage opening (21) in the first horizontal direction (X), which recess completely breaks through the front region of the slide (2, 4) at least in sections, resulting in a forkshaped design of the slide (2, 4).

2. The microplate processing apparatus (1) according to claim 1, wherein the second receptacle (30) comprises at least one stop (32, 33, 34) extending upwardly from a second plane (300) substantially in the vertical direction (Z).

3. The microplate processing apparatus (1) according to claim 2, wherein the stops (32, 33, 34) are arranged and configured to abut an inner side wall (61) of a microplate (6) accommodated in the second receptacle (30).

4. The microplate processing apparatus (1) according to claim 2, wherein the stops (32, 33, 34) are arranged and configured to abut an outer side wall (60) of a microplate (6) accommodated in the second receptacle (30).

5. The microplate processing apparatus (1) according to one of the preceding claims, wherein the passage opening (21) is substantially rectangular in shape.

6. The microplate processing apparatus (1) according to claim 1 or 5, wherein one, two or more recesses (210, 211, 212) are provided on each side of the passage opening (21).

7. The microplate processing apparatus (1) according to one of the preceding claims, wherein the slide (2, 4) comprises a first plane (200) from which the passage opening (21) extends, and wherein limiters (22, 23, 24) are provided extending upwardly in the vertical direction (Z) from the first plane (200) so as to be able to limit the lateral movements of a microplate (6) accommodated in the slide (2, 4).

8. The microplate processing apparatus (1) according to one of the preceding claims, wherein one, two or more arms (310, 311, 312) are provided on each side of the second receptacle (30).

9. The microplate processing apparatus (1) according to one of claims 1 to 8, wherein one, two or more stops (32, 33, 34) are provided on one, more or all of the arms (310, 311, 312).

10. The microplate processing apparatus (1) according to one of the preceding claims, wherein an actuator (35) and a guide (36) are provided which are operatively connected to the second receptacle (30) of the lift (3, 5) and allow the second receptacle (30) to be moved in the vertical direction (Z).

11. The microplate processing apparatus (1) according to one of the preceding claims, wherein two or more slides (2, 4) and two or more lifts (3, 5) associated therewith are provided, wherein microplates (6) are insertable into the processing area of the processing apparatus (1) with at least one first slide (2) and the at least one associated first lift (3), and wherein microplates (6) are removable from the processing area of the processing apparatus (1) with at least one second slide (4) and the at least one associated second lift (5).

12. A microplate processing system, comprising at least one microplate processing apparatus (1) according to one of the preceding claims and further comprising at least one of the components selected from the group comprising storage unit (7), washing or dispensing device (8) and manipulator (9), wherein each component is arranged in the vertical direction (Z) above one of the lifts (3, 5).

13. A method for inserting microplates (6) into a processing area of a microplate processing apparatus (1) according to one of claims 1 to 11, comprising the steps of:
- extending the slide (2, 4) from an inside position out of the processing area of the processing apparatus (1) to an outside position;
- raising the second receptacle (30) of the at least one lift (3, 5) in the vertical direction (Z) from a lower position through the passage opening (21) of the slide (2, 4) and beyond it to an upper position;
- placing a microplate (6) on the second receptacle (30);
- lowering the second receptacle (30) from the upper position to the lower position;
- placing the microplate (6) on the slide (2, 4); and
- retracting the slide (2, 4) from the outside position to the inside position.

14. The method according to claim 13, wherein the placing of the microplate (6) is performed by one of the components selected from the group comprising storage unit (7) and manipulator (9).

15. A method for discharging microplates (6) from a processing area of a microplate processing apparatus (1) according to one of claims 1 to 11, comprising the steps of:
- extending the slide (2, 4) equipped with a microplate (6) from an inner position out of the processing area of the processing apparatus (1) to an outer position;
- raising the second receptacle (30) of the at least one lift (3, 5) in the vertical direction (Z) from a lower position through the passage opening (21) of the slide (2, 4) and beyond it to an upper position;
- placing a microplate (6) on the second receptacle (30);
- retracting the slide (2, 4) from the outside position to the inside position;
- removing the microplate (6) from the second receptacle (30); and
- lowering the second receptacle (30) from the upper position to the lower position.

16. The method according to claim 15, wherein the removal of the microplate (6) is performed by one of the components selected from the group comprising storage unit (7) and manipulator (9).

## Revendications

1. Appareil de traitement de microplaques (1) comprenant
au moins un coulisseau (2, 4) avec un premier logement (20) pour des microplaques (6), le au moins un coulisseau (2, 4) pouvant être déplacé de façon linéaire dans une première direction horizontale (X) et permettant ainsi de faire rentrer ou de faire sortir les microplaques (6) dans ou depuis une zone de traitement de l'appareil de traitement (1),
au moins un dispositif de levage (3, 5) pouvant être déplacé dans une direction verticale (Z) et permettant d'amener ou de retirer les microplaques (6) du coulisseau (2,4), le coulisseau (2, 4) comprenant une ouverture de passage (21) dont le pourtour, dans la projection verticale, fait saillie en-dessous vers l'intérieur au moins partiellement dans le sens horizontal par rapport au pourtour d'une microplaque (6) logée dans le coulisseau (2, 4), et dans lequel
le dispositif de levage (3, 5) comprend un deuxième logement (30) pour des microplaques (6), dont le pourtour, dans la projection verticale, est inférieur au pourtour de l'ouverture de passage (21), le deuxième logement (30) pouvant ainsi être déplacé sans entrave à travers l'ouverture de passage (21) dans la direction verticale (Z), **caractérisé en ce que**
l'ouverture de passage (21) du coulisseau (2) comprend au moins un évidement (210, 211, 212) qui dépasse latéralement vers l'extérieur le pourtour d'une microplaque installée (6), et **en ce que** le deuxième logement (30) du dispositif de levage (3, 5) comprend au moins un bras (310, 311, 312) qui, dans la projection dans la direction verticale (Z), est agencé dans le au moins un évidement (210, 211, 212), un évidement avant (211) étant prévu sur un côté avant de l'ouverture de passage (21) dans la direction horizontale (X), cet évidement rompant complètement au moins sur une section la zone avant du coulisseau (2, 4), aboutissant ainsi à une conception du coulisseau (2, 4) en forme de fourche.

2. Appareil de traitement de microplaques (1) selon la revendication 1, dans lequel le deuxième logement (30) comprend au moins une butée (32, 33, 34) qui s'étend, depuis un deuxième plan (300), sensiblement vers le haut dans la direction verticale (Z).

3. Appareil de traitement de microplaques (1) selon la revendication 2, dans lequel les butées (32, 33, 34) sont disposées et conçues de manière à pouvoir s'appuyer sur une paroi latérale intérieure (61) d'une microplaque (6) reçue dans le deuxième logement (30).

4. Appareil de traitement de microplaques (1) selon la revendication 2, dans lequel les butées (32, 33, 34) sont disposées et conçues de manière à pouvoir s'appuyer sur une paroi latérale extérieure (60) d'une microplaque (6) reçue dans le deuxième logement (30).

5. Appareil de traitement de microplaques (1) selon l'une des revendications précédentes, dans lequel l'ouverture de passage (21) est réalisée sensiblement rectangulaire.

6. Appareil de traitement de microplaques (1) selon la revendication 1 ou 5, dans lequel il est prévu un, deux ou plusieurs évidements (210, 211, 212) sur chaque côté de l'ouverture de passage (21).

7. Appareil de traitement de microplaques (1) selon l'une des revendications précédentes, dans lequel le coulisseau (2, 4) comprend un premier niveau (200) depuis lequel s'étend l'ouverture de passage (21), et dans lequel il est prévu des organes de délimitation (22, 23, 24) qui s'étendent depuis le premier plan (200) vers le haut dans la direction verticale (Z) pour pouvoir délimiter les mouvements latéraux d'une microplaque (6) reçue dans le coulisseau (2, 4).

8. Appareil de traitement de microplaques (1) selon l'une des revendications précédentes, dans lequel il est prévu un, deux ou plusieurs bras (310, 311, 312) sur chaque côté du deuxième logement (30).

9. Appareil de traitement de microplaques (1) selon l'une des revendications 1 à 8, dans lequel il est prévu une, deux ou plusieurs butées (32, 33, 34) sur un, plusieurs ou sur tous les bras (310, 311, 312).

10. Appareil de traitement de microplaques (1) selon l'une des revendications précédentes, dans lequel il est prévu un actionneur (35) et un guidage (36), ces deux éléments étant en liaison active avec le deuxième logement (30) du dispositif de levage (3, 5) et permettant de déplacer le deuxième logement (30) dans la direction verticale (Z).

11. Appareil de traitement de microplaques (1) selon l'une des revendications précédentes, dans lequel il est prévu deux coulisseaux ou plus (2, 4) et deux dispositifs de levage associés (3, 5) ou plus, les microplaques (6) pouvant être introduites dans la zone de traitement de l'appareil de traitement (1) avec au moins un premier coulisseau (2) et le au moins un premier dispositif de levage associé (3), et les microplaques (6) pouvant être sorties de la zone de traitement de l'appareil de traitement (1) avec au moins un deuxième coulisseau (4) et le au moins un deuxième dispositif de levage associé (5).

12. Système de traitement de microplaques comprenant au moins un appareil de traitement de microplaques (1) selon l'une des revendications précédentes et comprenant en outre au moins un des composants choisis parmi le groupe comprenant une unité de stockage (7), un dispositif de lavage ou de distribution (8) et un manipulateur (9), chaque composant étant agencé dans la direction verticale (Z) au-dessus d'un des dispositifs de levage (3, 5).

13. Procédé pour introduire des microplaques (6) dans une zone de traitement d'un appareil de traitement de microplaques (1) selon l'une des revendications 1 à 11 comprenant les étapes consistant à :
- sortir le coulisseau (2, 4) depuis une position rentrée depuis la zone de traitement de l'appareil de traitement (1) dans une position sortie ;
- monter le deuxième logement (30) du au moins un dispositif de levage (3, 5) à travers l'ouverture de passage (21) du coulisseau (2, 4) dans la direction verticale (Z) depuis une position basse pour l'amener dans une position haute ;
- installer une microplaque (6) sur le deuxième logement (30) ;
- abaisser le deuxième logement (30) depuis la position haute vers la position basse ;
- installer la microplaque (6) sur le coulisseau (2, 4) ; et
- rentrer le coulisseau (2, 4) depuis la position sortie en position rentrée.

14. Procédé selon la revendication 13, dans lequel l'installation de la microplaque (6) se fait par l'intermédiaire d'un des composants choisis parmi le groupe comprenant une unité de stockage (7) et un manipulateur (9).

15. Procédé pour sortir des microplaques (6) d'une zone de traitement d'un appareil de traitement de microplaques (1) selon l'une des revendications 1 à 11, comprenant les étapes consistant à :
- sortir le coulisseau (2, 4) muni d'une microplaque (6) depuis une position rentrée, c'est-à-dire depuis la position de traitement de l'appareil de traitement (1), dans une position sortie ;
- monter le deuxième logement (30) du au moins un dispositif de levage (3, 5) à travers l'ouverture de passage (21) du coulisseau (2, 4) dans la direction verticale (Z) depuis une position basse pour l'amener en position haute ;
- installer une microplaque (6) sur le deuxième logement (30) ;
- rentrer le coulisseau (2, 4) depuis la position sortie en position rentrée ;
- retirer la microplaque (6) du deuxième logement (30) ; et
- abaisser le deuxième logement (30) depuis la position haute vers la position basse.

16. Procédé selon la revendication 15, dans lequel le retrait de la microplaque (6) se fait par l'intermédiaire d'un des composants choisis parmi le groupe comprenant une unité de stockage (7) et un manipulateur (9).
